# EUROPÄISCHE PATENTSCHRIFT

(11) **EP 2 897 742 B1**
(45) Veröffentlichungstag und Bekanntmachung des Hinweises auf die Patenterteilung: **08.05.2019**
(21) Anmeldenummer: 13789347.5
(22) Anmeldetag: 12.11.2013
(51) Int. Cl.: A45D 34/04, B65D 83/00, B05C 17/01, A61C 5/62, B05C 17/005

(54) **AUSTRAGVORRICHTUNG**
DISCHARGE DEVICE
DISPOSITIF DISTRIBUTEUR

(30) Priorität: 04.12.2012 EP 12195468
(43) Veröffentlichungstag der Anmeldung: 29.07.2015
(73) Patentinhaber: Sulzer Mixpac AG, 9469 Haag (CH)
(72) Erfinder: LEUE, Percy, 78224 Singen (DE)
(74) Vertreter: Manitz Finsterwald Patent- und Rechtsanwaltspartnerschaft mbB
(86) Internationale Anmeldenummer: PCT/EP2013/073654
(87) Internationale Veröffentlichungsnummer: WO 2014/086559

(56) Entgegenhaltungen:
- EP-A1- 0 167 878
- EP-A2- 1 084 765
- DE-A1- 3 520 523
- FR-A1- 2 855 504
- GB-A- 2 202 733
- US-A- 1 270 835

## Beschreibung

Die Erfindung betrifft eine Austragvorrichtung für eine fliessfähige Komponente gemäß dem Oberbegriff des Anspruchs 1.

In der DE 94 19 200 U1 wird eine Austrageinrichtung für eine fliessfähige Komponente in Form einer Dentalmasse beschrieben. Die Austragvorrichtung weist einen Vorratsbehälter mit einer Vorratskammer zur Aufnahme der Komponente, einer Einfüllöffnung und einer Austragöffnung auf. Sie verfügt über einen Kolben, welcher in Richtung einer Ausschubrichtung verschieblich innerhalb des Vorratsbehälters angeordnet ist, und mittels welchem die Komponente aus der Vorratskammer über die Austragöffnung ausgeschoben werden kann. Ausserdem weist sie ein Betätigungselement auf, mittels welchem der Kolben schrittweise in Richtung Austragöffnung verschoben werden kann. Das Betätigungselement und der Kolben sind so ausgeführt und angeordnet, dass bei einer Verschiebung des Betätigungselements von einer Ausgangsposition in eine Endposition der Kolben um einen Schritt in Richtung Austragöffnung verschoben wird. Nach Freigeben des Betätigungselements wird es durch eine Feder aus der Endposition in die Ausgangsposition verschoben.

Das Betätigungselement der genannten Austrageinrichtung muss dazu schwenkbar am Vorratsbehälter angeordnet sein, ausserdem muss die Feder zwischen dem Vorratsbehälter und dem Betätigungselement auf irgendeine Art und Weise fixiert werden.

Aus der FR 2 855 504 ist eine Austragvorrichtung gemäß dem Oberbegriff des Anspruchs 1 bekannt.

Es ist die Aufgabe der Erfindung, eine Austragvorrichtung vorzuschlagen, welche einfach und kostengünstig herstellbar ist. Erfindungsgemäß wird diese Aufgabe mit einer Austragvorrichtung mit den Merkmalen des Anspruchs 1 gelöst.

Erfindungsgemäss ist das Betätigungselement an der Einfüllöffnung angeordnet und die genannte Verschiebung des Betätigungselements erfolgt in Längsrichtung. Damit kann die für die Rückstellung des Betätigungselements in die Ausgangsposition notwendige Feder ebenfalls in Ausschubrichtung angeordnet werden, so dass ihre Fixierung beispielsweise zwischen dem Vorratsbehälter und dem Betätigungselement sehr einfach und kostengünstig möglich ist.

Ausserdem wird durch die genannte Anordnung des Betätigungselements und dessen Betätigungsrichtung eine gute Handhabbarkeit ermöglicht. Wenn am Vorratsbehälter ein Griffelement angeordnet ist, kann die Austragvorrichtung so gehalten werden, dass Zeigefinger und Mittelfinger am Griffelement anliegen und das Betätigungselement mit dem Daumen aus der Ausgangsposition in die Endposition verschoben wird. Es wird damit nur eine Kraft in Ausschubrichtung ausgeübt, so dass keine Gefahr besteht, dass die bereits auf einen Zielpunkt ausgerichtete Austragöffnung durch die Verschiebung des Betätigungselements ungewollt vom Zielpunkt weg bewegt wird. Ausserdem bleibt durch die Rückstellung des Betätigungselements ein Abstand zwischen dem Betätigungselement in der Ausgangsposition und dem Griffelement immer gleich gross, so dass die Handhabbarkeit der Austragvorrichtung vom Volumen des sich in der Vorratskammer befindlichen Komponente unabhängig ist. Dies unterscheidet die erfindungsgemässe Austragvorrichtung von einer gewöhnlichen Spritze, bei der sich der Abstand zwischen einem Drücker des Betätigungselements und dem Griffelement mit abnehmendem Volumen der Komponente immer weiter verringert und so die Handhabung immer schwieriger wird.

Die Austragvorrichtung weist einen Vorratsbehälter mit einer Vorratskammer zur Aufnahme der Komponente, einer Einfüllöffnung und einer Austragöffnung auf. Sie verfügt über einen Kolben, welcher entlang einer Ausschubrichtung verschieblich innerhalb des Vorratsbehälters angeordnet ist, und mittels welchem die Komponente aus der Vorratskammer über die Austragöffnung ausgeschoben werden kann. Ausserdem weist sie ein Betätigungselement auf, mittels welchem der Kolben schrittweise in Richtung Austragöffnung verschoben werden kann.

Weiterhin sind erfindungsgemäß der Vorratsbehälter und die Feder einstückig ausgeführt. Damit ist zum einen die Herstellung von Vorratsbehälter und Feder besonders kostengünstig, da sie in einem Herstellprozess, insbesondere mittels eines Spritzgussverfahrens hergestellt werden können. Ausserdem sind damit für die Austragsvorrichtung besonders wenige Einzelteile notwendig, womit die Montage besonders einfach und kostengünstig ist. Der Vorratsbehälter und die Feder können beispielsweise aus PP hergestellt sein.

Die Vorratskammer weist insbesondere einen kreisrunden Querschnitt auf, der zumindest bereichsweise konstant ist. Es sind aber auch andere Querschnitte, wie beispielsweise oval, rechteckig oder quadratisch möglich. Der Querschnitt der Vorratskammer erweitert sich insbesondere in Richtung Einfüllöffnung, so dass der Kolben einfach und ohne die Gefahr von Kollisionen in die Vorratskammer eingesetzt werden kann. Im Bereich der Austragöffnung kann sich der Querschnitt der Vorratskammer verkleinern. In diesem Fall korrespondiert insbesondere die Form des Kolbens mit dem Verlauf des Querschnitts der Vorratskammer im Bereich der Austragöffnung so, dass bis auf eine kleine Restmenge die gesamte Komponente aus der Vorratskammer ausgetragen werden kann. Die Komponente, welche beispielsweise als eine Flüssigkeit für den medizinischen Bereich oder auch als ein Klebstoff im handwerklichen Bereich ausgeführt sein kann, wird insbesondere über die Füllöffnung in die Vorratskammer eingefüllt. Es ist aber auch möglich, die Komponente über die Austragöffnung einzufüllen.

Das Betätigungselement und der Kolben sind so ausgeführt und angeordnet, dass bei einer Verschiebung des Betätigungselements von einer Ausgangsposition in eine Endposition der Kolben um einen Schritt in Richtung Austragöffnung verschoben wird. Darunter soll verstanden werden, dass der Kolben bei einem Schritt ein festgelegtes Stück in Richtung Austragöffnung verschoben wird und damit eine festgelegte Menge der Komponente ausgetragen wird. Unter einer schrittweisen Verschiebung des Kolbens soll damit verstanden werden, dass der Kolben mehrmals, also mindestens zweimal um je einen Schritt verschoben werden kann. Der Kolben wird bei den einzelnen Schritten insbesondere immer gleich weit verschoben. Es ist aber auch möglich, dass der Kolben nicht immer gleich verschoben wird.

Nach Freigeben des Betätigungselements wird es durch eine Feder aus der Endposition in die Ausgangsposition zurück verschoben. Dabei bleibt der Kolben in seiner erreichten Position stehen und nur das Betätigungselement wird zurück geschoben. Es findet damit eine Relativbewegung zwischen Kolben und Betätigungselement statt. Das Zurückschieben des Kolbens wird insbesondere durch Reibungskräfte zwischen einem Kolbenumfang des Kolbens und einer Innenwand der Vorratskammer verhindert. Nach dem Zurückschieben des Betätigungselements in die Ausgangsposition ist die Austragvorrichtung bereit, eine weitere definierte Menge der Komponente auszutragen.

Die Austragvorrichtung ist beispielsweise dafür ausgelegt, insgesamt zwischen 0.5 und 5 ml, insbesondere zwischen 1 und 3 ml, beispielsweise in 4 bis 8 Schritten auszutragen. Sie ist ausserdem dafür ausgelegt, nur einmal verwendet und anschliessend entsorgt zu werden.

In Ausgestaltung der Erfindung weist der Kolben wenigstens zwei in Ausschubrichtung beabstandete Vorschubflächen und das Betätigungselement wenigstens eine Betätigungsfläche auf. Die Vorschubflächen und die Betätigungsfläche sind so ausgeführt und angeordnet, dass bei einer Verschiebung des Betätigungselements von der Ausgangsposition in die Endposition über die Betätigungsfläche und die Vorschubfläche eine Kraft in Richtung Austragöffnung auf den Kolben übertragen wird. Damit wird ein besonders einfacher Aufbau der Austragvorrichtung ermöglicht. Die Vorschubflächen sind insbesondere abschnittsweise quer zur Ausschubrichtung und speziell zumindest abschnittsweise senkrecht zur Ausschubrichtung angeordnet.

In Ausgestaltung der Erfindung verfügt das Betätigungselement über einen Betätigungsarm, der in Richtung Austragöffnung und damit hauptsächlich in Ausschubrichtung orientiert ist. Der Betätigungsarm weist die Betätigungsfläche auf, so dass die Kraft zum Verschieben des Kolbens in Richtung Austragöffnung über den Betätigungsarm und die Betätigungsfläche auf den Kolben übertragen wird. Damit wird ein einfacher und kostengünstiger Aufbau des Betätigungselements ermöglicht. Das Betätigungselement weist insbesondere zwei diametral gegenüber liegende Betätigungsarme auf. Damit ist eine symmetrische Krafteinleitung auf den Kolben möglich, so dass dieser gleichmässig und ohne die Gefahr eines Verkippens oder Verkantens verschoben werden kann.

In Ausgestaltung der Erfindung ist der Betätigungsarm quer zur Ausschubrichtung flexibel. Er weist eine Einlenkfläche auf, die mit einer Abweisfläche des Kolbens so zusammenwirkt, dass der Betätigungsarm bei einer Verschiebung aus der Endposition in Richtung Ausgangsposition so quer zur Ausschubrichtung verbogen wird, dass eine Relativbewegung zwischen Kolben und Betätigungselement ermöglicht wird. Damit kann die notwendige Entkopplung von Betätigungsarm und Kolben zur Ermöglichung der Relativbewegung der beiden Teile besonders einfach umgesetzt werden. Die Einlenkfläche ist insbesondere so geneigt, dass sie an ihrem Ende in Richtung Austragöffnung einen geringeren Abstand zur Innenwand der Vorratskammer aufweist als an ihrem entgegen gesetztem Ende. Die Abweisfläche ist beispielsweise als eine teilweise umlaufende Kante an der Innenwand der Vorratskammer ausgeführt. Sobald das Betätigungselement freigegeben wird, wird damit das Betätigungselement von der Feder in Richtung Ausgangsposition mit einer Kraft beaufschlagt. Durch das Zusammenwirken von Abweisfläche des Kolbens und Einlenkfläche des Betätigungsarms wird dieser nach innen verbogen und kann am Kolben vorbei gleiten.

Es ist aber auch möglich, dass der Kolben flexibel ist und dieser zur Ermöglichung der notwendigen Relativbewegung zusätzlich oder alleine ausweichen kann.

In Ausgestaltung der Erfindung weist der Kolben einen in Richtung Einfüllöffnung offenen Kolbeninnenraum auf, welcher quer zur Ausschubrichtung von einem Kolbenmantel begrenzt wird. Die Vorschubflächen sind im Kolbenmantel ausgebildet und der Betätigungsarm ragt in den Kolbeninnenraum hinein. Damit wird ein besonders kompakter Aufbau der Austragvorrichtung möglich. Der Betätigungsarm ragt zumindest so lange in den Kolbeninnenraum hinein, so lange der Kolben noch um mehr als einen Schritt verschoben werden kann. Beim letzten Schritt kann sich der Betätigungsarm beispielsweise auf einem Rand des Kolbenmantels abstützen, so dass er dann nicht mehr in den Innenraum hineinragen würde.

In Ausgestaltung der Erfindung weist der Kolbenmantel eine Ausnehmung auf, welche über eine Vorschubfläche verfügt. Damit ist der Kolbenmantel besonders einfach herstellbar. Ausserdem ist wenig Material für dessen Herstellung notwendig, so dass er auch kostengünstig hergestellt werden kann.

Der Kolbenmantel weist insbesondere zwei diametral gegenüber liegende Ausnehmungen auf, welche jeweils über eine Vorschubfläche verfügen. Damit ist wie bereits beschrieben eine symmetrische Krafteinleitung in den Kolben einfach möglich.

In Ausgestaltung der Erfindung weist der Kolben ein bezüglich der Ausschubrichtung umlaufendes Dichtelement auf, welches an der Innenwand der Vorratskammer anliegt. Damit wird zum einen eine Abdichtung zwischen dem Kolben und der Vorratskammer erreicht, so dass wirkungsvoll gewährleistet wird, dass die Komponente vollständig ausgetragen wird und nicht teilweise an der Innenwand der Vorratskammer haften bleibt. Ausserdem wird so ein luftdichter Abschluss der Vorratskammer in Richtung Einfüllöffnung erreicht, so dass über diesen Weg keine Luft in die Vorratskammer eindringen und die Komponente dadurch geschädigt werden kann. Zum anderen kann mittels des Dichtelements die bereits beschriebenen Reibungskräfte zwischen dem Kolben und der Vorratskammer beim Zurückschieben des Betätigungselements in die Ausgangsposition eingestellt und insbesondere erhöht werden. Das Dichtelement kann insbesondere als ein O-Ring aus einem Elastomer ausgeführt sein.

In Ausgestaltung der Erfindung weist der Kolben einen Kolbenboden auf, der die Vorratskammer in Richtung Einfüllöffnung abschliesst. Der Kolbenboden berührt dabei umlaufend die Innenwand der Vorratskammer. Der Kolbenboden ist aus einem anderen Material als der Kolbenmantel ausgeführt. Damit kann sowohl für den Kolbenboden, also auch für den Kolbenmantel ein optimales Material verwendet werden, wobei das Material für den Kolbenboden insbesondere weicher ist als für den Kolbenmantel. Der Kolbenboden kann beispielsweise aus einem so genannten Thermoplastischen Elastomer (Kurzzeichen TPE) und der Kolbenmantel beispielsweise aus Polypropylen (Kurzzeichen PP) oder Polyamid (Kurzzeichen PA) hergestellt sein.

Der Kolben ist insbesondere einstückig ausgeführt. Er besteht also aus einem einzigen Teil und muss nicht aus mehreren Teilen zusammen gebaut werden. Damit ist die Montage der Austragvorrichtung besonders einfach. Der Kolben ist insbesondere als ein so genanntes Zwei-Komponenten-Spritzgussteil ausgeführt. Ein derartiges Spritzgussteil wird in einem an sich bekannten Mehrkomponentenspritzgussverfahren aus zwei verschiedenen Ausgangsmaterialien hergestellt. Also beispielsweise wird der Kolbenboden aus TPE und der Kolbenmantel aus PP oder PA hergestellt.

Der Vorratsbehälter und die Feder sind insbesondere aus unterschiedlichen Materialien ausgeführt. Damit kann sowohl für den Vorratsbehälter, also auch für die Feder ein optimales Material verwendet werden. Der Vorratsbehälter und die Feder sind insbesondere als ein Zwei-Komponenten-Spritzgussteil ausgeführt, das ebenfalls mit einem Mehrkomponentenspritzgussverfahren aus zwei verschiedenen Ausgangsmaterialien hergestellt werden kann. Der Vorratsbehälter kann beispielsweise aus PP und die Feder aus PA hergestellt sein.

In Ausgestaltung der Erfindung ist das Betätigungselement so angeordnet, dass es die Einfüllöffnung des Vorratsbehälters verschliesst. Damit kann verhindert werden, dass Fremdstoffe in den Kolbeninnenraum eindringen können.

Das Betätigungselement weist insbesondere eine Nut auf, in welcher eine Ausbuchtung des Vorratsbehälters angeordnet ist. Damit wird wirkungsvoll verhindert, dass ein einmal auf den Vorratsbehälter aufgestecktes Betätigungselement ungewollt wieder von ihm herunter rutschen kann. Die Nut ist dabei so ausgeführt, dass die Ausbuchtung sowohl in der Ausgangsposition, als auch in der Endposition in der Nut angeordnet ist. Die genannte Nut ist insbesondere umlaufend ausgeführt. Die Ausbuchtung des Vorratsbehälters ist insbesondere als ein umlaufender Bund ausgeführt.

In der Endposition des Betätigungselements liegt die Ausbuchtung insbesondere an einer in Richtung Austragöffnung orientierten End-Flanke der Nut an. Damit wird gewährleistet, dass das Betätigungselement nur um ein festgelegtes Stück in Richtung Austragöffnung verschoben werden kann. Somit wird bei einer Verschiebung des Betätigungselements von der Ausgangsposition in die Endposition immer dieselbe Menge der Komponente ausgetragen. Ohne einen derartigen Anschlag würde die Bewegung des Betätigungselements erst dann gestoppt, wenn die Feder auf Anschlag geht. Der Punkt, bei dem das passiert, ist aber nicht so genau definiert.

Die Austragöffnung kann insbesondere mit einem Deckel verschlossen werden, der beispielsweise aus PP mit einem Spritzgussverfahren gefertigt sein kann.

Das Betätigungselement kann beispielsweise aus PP oder PA mit einem Spritzgussverfahren gefertigt werden.

Die Austragvorrichtung ist insbesondere für das Austragen von nur einer Komponente vorgesehen. Es ist aber auch möglich, dass zwei oder mehr Komponenten vor dem Austragen innerhalb der Austragvorrichtung gemischt und die gemischten Komponenten ausgetragen werden. Dazu können innerhalb des Vorratsbehälters zwei oder mehr getrennte Vorratskammern angeordnet sein, in denen unterschiedliche Komponenten enthalten sind. Aus den Vorratskammern können die Komponenten mittels eines Kolbens oder mehrerer gekoppelter Kolben gleichzeitig ausgetragen werden. Der oder die Kolben werden wie beschrieben von einer Betätigungsvorrichtung betätigt. Zur besseren Mischung der Komponenten kann innerhalb der Austragvorrichtung ein Mischelement angeordnet sein oder es kann möglich sein, ein Mischelement auf die Austragvorrichtung aufzustecken.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine Schnittdarstellung einer Austragvorrichtung mit einem Betätigungselement in einer Ausgangsposition,
- Fig. 2: die Austragvorrichtung aus Fig. 1 mit dem Betätigungselement in einer Endposition,
- Fig. 3: die Austragvorrichtung aus Fig. 1 und 2 mit dem wieder in die Ausgangsposition zurückgestellten Betätigungselement und
- Fig. 4: einen Kolben einer Austragsvorrichtung in einer zweiten Ausführungsform.

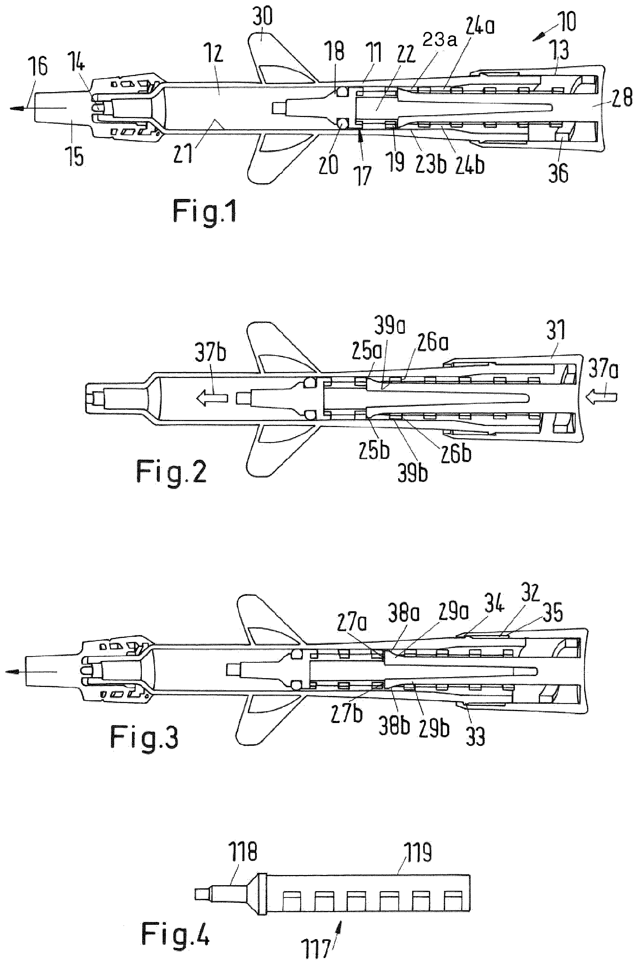

Gemäss den Fig. 1, 2 und 3 weist eine Austragvorrichtung 10 für eine fliessfähige Komponente einen Vorratsbehälter 11 auf. Der Vorratsbehälter 11 verfügt über eine Vorratskammer 12 für eine fliessfähige Komponente. Der Vorratsbehälter 11 weist eine Einfüllöffnung 13 und an seinem entgegen gesetzten Ende eine Austragöffnung 14 auf, welche von einem abnehmbaren Deckel 15 verschlossen ist. Die Komponente kann über die Einfüllöffnung 13 in die Vorratskammer 12 eingefüllt und nach Abnahme des Deckels 15 über die Austragöffnung 14 ausgetragen werden.

Die Vorratskammer 12 weist abschnittsweise eine hohlzylindrische Innenkontur auf, wobei sich die Vorratskammer 12 in Richtung Austragöffnung 14 verjüngt und in Richtung Einfüllöffnung 13 aufweitet.

Innerhalb des Vorratsbehälters 11 ist entlang einer Ausschubrichtung 16 verschieblich ein Kolben 17 angeordnet. Der Kolben 17 weist einen Kolbenboden 18 auf, der die Vorratskammer 12 in Richtung Einfüllöffnung 13 abschliesst. Der Kolbenboden 18 weist eine sich in Ausschubrichtung 16 erstreckende Aussenkontur auf, die mit der sich in Ausschubrichtung 16 erstreckenden Innenkontur der Vorratskammer 12 im Bereich der Austragöffnung 14 korrespondiert. Am Kolbenboden 18 ist ein Dichtelement in Form eines O-Rings 20 so angeordnet, dass er ringsum an einer Innenwand 21 der Vorratskammer 12 anliegt und so den Kolbenboden 18 gegenüber der Innenwand 21 der Vorratskammer 12 abdichtet.

Der Kolben 17 weist ausserdem einen Kolbenmantel 19 auf, der sich an den Kolbenboden 18 in Richtung Einfüllöffnung 13 anschliesst. Der Kolben 17 ist als ein Spritzgussteil und damit einstückig ausgeführt. Der Kolbenmantel 19 weist hauptsächlich eine rohrförmige Grundform und damit einen Richtung Einfüllöffnung 13 offenen Kolbeninnenraum 22 auf. Der Kolbenmantel 19 weist insgesamt sechs Paare von Ausnehmungen auf wobei aus Übersichtlichkeitsgründen nur vier Ausnehmungen 23a, 23b; 24a, 24b eines zweiten und eines dritten Paars mit Bezugszeichen versehen sind. Die Ausnehmungen 23a, 23b des zweiten Paares sind an der selben axialen Position und diametral gegenüber liegend angeordnet. Die Ausnehmungen 24a, 24b des dritten Paares sind in Umfangsrichtung an den selben Positionen, aber in Richtung Einfüllöffnung 13 verschobenen angeordnet. Die Ausnehmungen 23a, 23b, 24a, 24b des Kolbenmantels 19 weisen in Richtung Austragöffnung 14 orientierte Vorschubflächen 25a, 25b, 26a, 26b auf, die senkrecht zur Ausschubrichtung 16 ausgerichtet sind.

Die Vorschubflächen 25a, 25b, 26a, 26b können mit einer ersten Betätigungsfläche 27a und einer zweiten Betätigungsfläche 27b eines Betätigungselements 28 zusammen wirken. Das Betätigungselement 28 ist an der Einfüllöffnung 13 angeordnet. Es weist einen ersten Betätigungsarm 29a und einen zweiten Betätigungsarm 29b auf, die in den Kolbeninnenraum 22 des Kolbenmantels 19 hinein ragen und jeweils quer zur Ausschubrichtung 16 flexibel sind. Die erste und zweite Betätigungsfläche 27a, 27b bilden jeweils den Abschluss des ersten und zweiten Betätigungsarms 29a, 29b in Richtung Austragöffnung 14 und sind ebenfalls hauptsächlich senkrecht gegenüber der Ausschubrichtung 16 angeordnet. Die Betätigungsarme 29a, 29b sind so ausgeführt und an der Einfüllöffnung 13 angeordnet, dass die in Richtung Austragöffnung 14 orientierten Enden mit den Betätigungsflächen 27a, 27b in die Ausnehmungen 23a, 23b, 24a, 24b des Kolbenmantels 19 hinein ragen können. Damit kann über das Betätigungselement 28, die Betätigungsarme 29a, 29b und die Betätigungsflächen 27a, 27b eine Kraft auf die Vorschubflächen 25a, 25b, 26a, 26b und damit auf den Kolben 17 in Richtung Austragöffnung 14 übertragen werden. Die Kraft wird von einem Benutzer durch Verschieben des Betätigungselements 28 in Richtung Austragöffnung 14 aufgebracht. Die genannte Kraft kann insbesondere mit dem Daumen einer Hand aufgebracht werden. Zur Abstützung der Kraft und Fixierung der Austragvorrichtung 10 weist der Vorratsbehälter 11 ein nach aussen orientiertes Griffelement 30 auf. Das Griffelement 30 ist so ausgeführt, dass sich insbesondere Zeigefinger und Mittelfinger der Hand abstützen können.

Das Betätigungselement 28 weist neben den Betätigungsarmen 29a, 29b eine Kappe 31 auf, die eine hauptsächlich Becherförmige Grundform aufweist. Die Kappe 31 und damit das Betätigungselement 28 sind so auf den Vorratsbehälter 11 aufgesteckt, dass die Kappe 31 und der Vorratsbehälter 11 überlappen. Damit verschliesst das Betätigungselement 28 die Einfüllöffnung 13 des Vorratsbehälters 11. Die Kappe 31 und damit das Betätigungselement 28 weist an seiner Innenseite eine umlaufende Nut 32 auf, in welcher eine Ausbuchtung in Form eines umlaufenden Bunds 33 des Vorratsbehälters 11 angeordnet ist. Die Nut 32 und der Bund 33 sind so ausgeführt, dass das Betätigungselement 28 gegenüber dem Vorratsbehälter 11 verschoben werden kann und der Bund 33 weiterhin in der Nut 32 verbleibt. Das Betätigungselement 28 kann damit zwischen einer in den Fig. 1 und 3 dargestellten Ausgangsposition, in welcher der Bund 33 an einer in Richtung Einfüllöffnung 13 orientierten Ausgangs-Flanke 34 ansteht, und einer in Fig. 2 dargestellten Endposition, in welcher der Bund 33 an einer in Richtung Austragöffnung 14 orientierten End-Flanke 35 ansteht, gegenüber dem Vorratsbehälter 11 verschoben werden.

An den Vorratsbehälter 11 schliesst sich an der Einfüllöffnung 13 eine Feder 36 an, die eine Kraft entgegen der Ausschubrichtung 16 aufbringen kann. Die Feder 36 ist als eine Schraubenfeder und einstückig mit dem Vorratsbehälter 11 ausgeführt. Der Vorratsbehälter 11 und die Feder 36 sind als ein so genanntes Zwei-Komponenten-Spritzgussteil ausgeführt, wobei der Vorratsbehälter 11 aus Polypropylen und die Feder 36 aus Polyamid ausgeführt sind. Es sind aber auch andere Materialien möglich.

Die Feder 36 ist im montierten Zustand der Austragvorrichtung 10 so vorgespannt, dass sie eine entgegen der Ausschubrichtung 16 ausgerichtete Kraft auf das Betätigungselement 28 ausübt, das Betätigungselement 28 also in Richtung Ausgangsposition drückt. Die Feder 36 ist ausserdem so ausgelegt, dass sie auch in der Ausgangsposition eine Kraft auf das Betätigungselement 28 ausübt und so das Betätigungselement 28 in der Ausgangsposition fixiert.

Die Ausgestaltung der Ausnehmungen 23a, 23b, 24a, 24b im Kolbenmantel 19 und der Betätigungsarme 29a, 29b des Betätigungselements 28 ermöglichen ein schrittweises Austragen der Komponente über die Austragsöffnung 14 aus der Vorratskammer 12. Dies wird im Folgenden an Hand der Unterschiede in den Fig. 1, 2 und 3 genauer beschrieben.

In der Fig. 1 befindet sich das Betätigungselement 28 in der Ausgangsposition und die Betätigungsarme 29a, 29b tauchen in das zweite Paar Ausnehmungen 23a, 23b ein, so dass die Betätigungsflächen 27a, 27b der Betätigungsarme 29a, 29b so positioniert sind, dass sie mit den Vorschubflächen 25a, 25b der Ausnehmungen 23a, 23b zusammen wirken können. Aus der Tatsache, dass die Betätigungsarme 29a, 29b in das zweite Paar Ausnehmungen 23a, 23b und nicht in das erste Paar Ausnehmungen eintaucht, ist ersichtlich, dass der Kolben 17 bereits um einen Schritt in Richtung Austragsöffnung 14 verschoben und dadurch aus der Vorratskammer 12 bereits eine definierte Menge der Komponente ausgetragen wurde.

Soll nun ausgehend von der Darstellung in Fig.1 eine weitere definierte Menge der Komponente ausgetragen werden, so wird zunächst der Deckel 15 abgenommen und dann das Betätigungselement 28 in Richtung Austragöffnung 14 mit einer Kraft beaufschlagt und damit gegen die Kraft der Feder 36 gegenüber dem Vorratsbehälter 11 verschoben. Die genannte Verschiebung wird in Fig. 2 durch die Pfeile 37a, 37b symbolisiert. Damit wird über das Betätigungselement 28, die Betätigungsarme 29a, 29b und die Betätigungsflächen 27a, 27b eine Kraft auf die Vorschubflächen 25a, 25b und damit auf den Kolben 17 in Richtung Austragöffnung 14 übertragen und dieser in Richtung Austragöffnung 14 verschoben. Durch das genannte Verschieben des Kolbens 17 wird ein Teil der Komponente über die Austragöffnung 14 ausgetragen. Das Betätigungselement 28 kann so weit verschoben werden, bis es die in Fig. 2 dargestellte Endposition erreicht, also der Bund 33 des Vorratsbehälters 11 an der End-Flanke 35 der Nut 32 des Betätigungselements 28 ansteht und ein weiteres Verschieben des Betätigungselements 28 und damit des Kolbens 17 unmöglich macht.

Wird nun ausgehend von der in Fig. 2 dargestellten Endposition das Betätigungselement 28 nicht mehr mit einer Kraft in Richtung Austragöffnung 14 beaufschlagt und damit frei gegeben, so wird es von der Federkraft der Feder 36 wieder in Richtung Ausgangsposition, also von der Austragöffnung 14 weg, gedrückt. Zur Ermöglichung eines weiteren Austragens der Komponente soll aber der Kolben 17 in der erreichten Position bleiben, so dass eine Entkopplung von Betätigungselement 28 und Kolben 17 notwendig ist. Diese Entkopplung wird durch ein Zusammenwirken von Einlenkflächen 38a, 38b der Betätigungsarme 29a, 29b und Abweisflächen 39a, 39b des Kolbenmantels 19 und damit des Kolbens 17 erreicht. Die Einlenkflächen 38a, 38b schliessen an die Betätigungsflächen 27a, 27b an und sind so geneigt, dass sie an ihrem Ende in Richtung Betätigungsflächen 27a, 27b einen geringeren Abstand zur Innenwand 21 der Vorratskammer 12 aufweisen als an ihrem entgegen gesetztem Ende. Die Abweisflächen 39a, 39b sind als senkrecht zur Ausschubrichtung 16 verlaufende Kanten der Ausnehmungen 23a, 23b in Richtung Einfüllöffnung 13 ausgeführt. Sobald das Betätigungselement 28 freigegeben wird, wird das Betätigungselement 28 wie beschrieben von der Feder 36 in Richtung Ausgangsposition mit einer Kraft beaufschlagt. Durch das Zusammenwirken von Abweisflächen 39a, 39b des Kolbens 17 und Einlenkflächen 38a, 38b der Betätigungsarme 29a, 29b werden diese nach innen, also von der Innenwand 21 der Vorratskammer 12 weg, so weit verbogen, dass die Betätigungsarme 29a, 29b am Kolben 17 vorbei gleiten kann. Damit ist eine Relativbewegung zwischen Kolben 17 und Betätigungselement 28 möglich, so dass der Kolben 17 stehen bleibt und das Betätigungselement 28 wieder in die Ausgangsposition zurückgeschoben wird. Die dann erreichte Ausgangsposition des Betätigungselements 28 ist in Fig. 3 dargestellt. Diese unterscheidet sich von der in der Fig. 1 dargestellten Position nur dadurch, dass die Betätigungsarme 29a, 29b jetzt in das dritte Paar Ausnehmungen 24a, 24b eintauchen. Ausgehend von dieser Ausgangsposition kann durch Wiederholen des beschriebenen Ablaufs eine weitere definierte Menge der Komponente ausgetragen werden.

Auf Grund der sechs Paare an Ausnehmungen im Kolbenmantel 19 kann der Kolben 17 in sechs Schritten in Richtung Austragöffnung 14 verschoben, womit insgesamt sechs definierte Mengen der Komponente ausgetragen werden können.

Damit der Kolben 17 beim Zurückschieben des Betätigungselements 28 nicht ebenfalls verschoben wird, ist eine ausreichend hohe Reibung zwischen Kolben 17 und Innenwand 21 der Vorratskammer 12 notwendig. Bei der Austragvorrichtung 10 gemäss der Fig. 1, 2 und 3 wird die genannte Reibung durch das Dichtelement in Form des O-Rings 20 gewährleistet.

Es ist aber auch möglich, dass der Kolbenboden so ausgeführt ist, dass er ohne zusätzliches Dichtelement eine ausreichend hohe Reibung mit der Innenwand der Vorratskammer aufweist.

Ein derartiges Ausführungsbeispiel eines Kolbens 117 ist in Fig. 4 dargestellt. Der Kolben 117 ist grundsätzlich gleich aufgebaut wie der Kolben 17 aus den Fig. 1, 2 und 3, weshalb nur auf die Unterschiede der beiden Kolben 17, 117 eingegangen wird.

Der Kolben 117 ist als ein Zwei-Komponenten-Spritzgussteil ausgeführt. Ein Kolbenboden 118 ist aus einem anderen, weicheren Material ausgeführt als ein Kolbenmantel 119. Der Kolbenboden 118 ist beispielsweise aus einem Thermoplastischen Elastomer (Kurzzeichen TPE) und der Kolbenmantel 119 beispielsweise aus Polypropylen (Kurzzeichen PP) oder Polyamid (Kurzzeichen PA) hergestellt. Der Kolbenboden 118 weist eine Aussenkontur auf, die mit der Innenkontur der Vorratskammer korrespondiert, so dass kein zusätzliches Dichtelement notwendig ist.

## Patentansprüche

1. Austragvorrichtung für eine fliessfähige Komponente mit
- einem Vorratsbehälter (11) mit einer Vorratskammer (12) zur Aufnahme der Komponente, einer Einfüllöffnung (13) und einer Austragöffnung (14),
- einem Kolben (17), welcher in Richtung einer Ausschubrichtung (16) verschieblich innerhalb des Vorratsbehälters (11) angeordnet ist, und mittels welchem die Komponente aus der Vorratskammer (12) über die Austragöffnung (14) ausgeschoben werden kann,
- einem Betätigungselement (28), mittels welchem der Kolben (17) schrittweise in Richtung Austragöffnung (14) verschoben werden kann und
- einer auf das Betätigungselement (28) wirkenden Feder (36),
wobei
- das Betätigungselement (28) und der Kolben (17) so ausgeführt und angeordnet sind, dass bei einer Verschiebung des Betätigungselements (28) von einer Ausgangsposition in eine Endposition der Kolben (17) um einen Schritt in Richtung Austragöffnung (14) verschoben wird und
- das Betätigungselement (28) durch die Feder (36) aus der Endposition in die Ausgangsposition verschiebbar ist,
wobei
das Betätigungselement (28) an der Einfüllöffnung (13) angeordnet ist und die genannte Verschiebung des Betätigungselements (28) in Ausschubrichtung (16) erfolgt,
**dadurch gekennzeichnet, dass**
der Vorratsbehälter (11) und die Feder (36) einstückig ausgeführt sind.

2. Austragvorrichtung nach Anspruch 1,
**dadurch gekennzeichnet, dass**
- der Kolben (17) wenigstens zwei in Ausschubrichtung (16) beabstandete Vorschubflächen (25a, 25b, 26a, 26b) aufweist und
- das Betätigungselement (28) wenigstens eine Betätigungsfläche (27a, 27b) aufweist,
wobei die Vorschubflächen (25a, 25b, 26a, 26b) und die Betätigungsfläche (27a, 27b) so ausgeführt und angeordnet sind, dass bei einer Verschiebung des Betätigungselements (28) von der Ausgangsposition in die Endposition über die Betätigungsfläche (27a, 27b) und die Vorschubfläche (25a, 25b, 26a, 26b) eine Kraft in Richtung Austragöffnung (14) auf den Kolben (17) übertragen wird.

3. Austragvorrichtung nach Anspruch 2,
**dadurch gekennzeichnet, dass**
das Betätigungselement (28) über einen Betätigungsarm (29a, 29b) verfügt, der in Richtung Austragöffnung (14) orientiert ist und die Betätigungsfläche (27a, 27b) aufweist.

4. Austragvorrichtung nach Anspruch 3,
**dadurch gekennzeichnet, dass**
der Betätigungsarm (29a, 29b) quer zur Ausschubrichtung (16) flexibel ist und eine Einlenkfläche (38a, 38b) aufweist, die mit einer Abweisfläche (39a, 39b) des Kolbens (17) so zusammenwirkt, dass der Betätigungsarm (29a, 29b) bei einer Verschiebung aus der Endposition in die Ausgangsposition so quer zur Ausschubrichtung (16) verbogen wird und damit eine Relativbewegung zwischen Kolben (17) und Betätigungselement (28) ermöglicht wird.

5. Austragvorrichtung nach Anspruch 3 oder 4,
**dadurch gekennzeichnet, dass**
der Kolben (17) einen in Richtung Einfüllöffnung (13) offenen Kolbeninnenraum (22) aufweist, der quer zur Ausschubrichtung (16) von einem Kolbenmantel (19) begrenzt wird,
die Vorschubflächen (25a, 25b, 26a, 26b) im Kolbenmantel (19) ausgebildet sind und
der Betätigungsarm (29a, 29b) in den Kolbeninnenraum (22) hinein ragt.

6. Austragvorrichtung nach Anspruch 5,
**dadurch gekennzeichnet, dass**
der Kolbenmantel (19) eine Ausnehmung (23a, 23b, 24a, 24b) aufweist, welche über eine Vorschubfläche (25a, 25b, 26a, 26b) verfügt.

7. Austragvorrichtung nach Anspruch 6,
**dadurch gekennzeichnet, dass**
der Kolbenmantel (19) zwei diametral gegenüber liegende Ausnehmungen (23a, 23b; 24a, 24b) aufweist, welche jeweils über eine Vorschubfläche (25a, 25b, 26a, 26b) verfügen.

8. Austragvorrichtung nach einem der Ansprüche 1 bis 7,
**dadurch gekennzeichnet, dass**
der Kolben (17) ein umlaufendes Dichtelement (20) aufweist, welches an einer Innenwand (21) der Vorratskammer (12) anliegt.

9. Austragvorrichtung nach einem der Ansprüche 1 bis 7,
**dadurch gekennzeichnet, dass**
der Kolben (17) einen Kolbenboden (18) aufweist, der die Vorratskammer (12) in Richtung Einfüllöffnung (13) abschliesst und aus einem anderen Material als der Kolbenmantel (19) ausgeführt ist.

10. Austragvorrichtung nach Anspruch 9,
**dadurch gekennzeichnet, dass**
der Kolben (17) einstückig ausgeführt ist.

11. Austragvorrichtung nach einem der Ansprüche 1 bis 10,
**dadurch gekennzeichnet, dass**
der Vorratsbehälter (11) und die Feder (36) aus unterschiedlichen Materialien ausgeführt sind.

12. Austragvorrichtung nach einem der Ansprüche 1 bis 11,
**dadurch gekennzeichnet, dass**
das Betätigungselement (28) so angeordnet ist, dass es die Einfüllöffnung (13) des Vorratsbehälters (11) verschliesst.

13. Austragvorrichtung nach Anspruch 12,
**dadurch gekennzeichnet, dass**
das Betätigungselement (28) eine Nut (32) aufweist, in welcher eine Ausbuchtung (33) des Vorratsbehälters (11) angeordnet ist.

14. Austragvorrichtung nach Anspruch 13,
**dadurch gekennzeichnet, dass**
in der Endposition des Betätigungselements (28) die Ausbuchtung (33) an einer in Richtung Austragöffnung (14) orientierten End-Flanke (35) der Nut (32) anliegt.

## Claims

1. A dispensing apparatus for a flowable component comprising
- a storage container (11) having a storage chamber (12) for the reception of the component, a filling opening (13) and a dispensing opening (14);
- a piston (17) which is displaceably arranged within the storage container (11) in the direction of an expulsion direction (16) and by means of which the component can be expelled from the storage chamber (12) via the dispensing opening (14);
- an actuation element (28) by means of which the piston (17) can be displaced stepwise in the direction of the dispensing opening (14); and
- a spring (36) acting on the actuation element (28),
wherein
- the actuation element (28) and the piston (17) are configured and arranged such that, on a displacement of the actuation element (28) from a starting position into a final position, the piston (17) is displaced by one step in the direction of the dispensing opening (14); and
- the actuation element (28) can be displaced by the spring (36) from the final position into the starting position,
wherein
the actuation element (28) is arranged at the filling opening (13) and said displacement of the actuation element (28) takes place in the expulsion direction (16),
**characterized in that**
the storage container (11) and the spring (36) are designed in one piece.

2. A dispensing apparatus in accordance with claim 1,
**characterized in that**
- the piston (17) has at least two feed surfaces (25a, 25b, 26a, 26b) spaced apart in the expulsion direction (16); and
- the actuation element (28) has at least one actuation surface (27a, 27b),
with the feed surfaces (25a, 25b, 26a, 26b) and the actuation surface (27a, 27b) being configured and arranged such that, on a displacement of the actuation element (28) from the starting position into the final position, a force is transmitted in the direction of the dispensing opening (14) onto the piston (17) via the actuation surface (27a, 27b) and the feed surface (25a, 25b, 26a, 26b).

3. A dispensing apparatus in accordance with claim 2,
**characterized in that**
the actuation element (28) has an actuation arm (29a, 29b) which is oriented in the direction of the dispensing opening (14) and which has the actuation surface (27a, 27b).

4. A dispensing apparatus in accordance with claim 3,
**characterized in that**
the actuation arm (29a, 29b) is flexible transversely to the expulsion direction (16) and has a guiding surface (38a, 38b) which cooperates with a repelling surface (39a, 39b) of the piston (17) such that, on a displacement from the final position into the starting position, the actuation arm (29a, 29b) is bent transversely to the expulsion direction (16) and a relative movement is thus enabled between the piston (17) and the actuation element (28).

5. A dispensing apparatus in accordance with claim 3 or claim 4,
**characterized in that**
the piston (17) has an inner piston space (22) open in the direction of the filling opening (13) and bounded transversely to the expulsion direction (16) by a piston jacket (19);
**in that** the feed surfaces (25a, 25b, 26a, 26b) are formed in the piston jacket (19); and
**in that** the actuation arm (29a, 29b) projects into the inner piston space (22).

6. A dispensing apparatus in accordance with claim 5,
**characterized in that**
the piston jacket (19) has a recess (23a, 23b, 24a, 24b) which has a feed surface (25a, 25b, 26a, 26b).

7. A dispensing apparatus in accordance with claim 6,
**characterized in that**
the piston jacket (19) has two diametrically oppositely disposed recesses (23a, 23b; 24a, 24b) which each have a feed surface (25a, 25b, 26a, 26b).

8. A dispensing apparatus in accordance with any one of the claims 1 to 7,
**characterized in that**
the piston (17) has a surrounding sealing element (20) which lies at an inner wall (21) of the storage chamber (12).

9. A dispensing apparatus in accordance with any one of the claims 1 to 7,
**characterized in that**
the piston (17) has a piston base (18) which terminates the storage chamber (12) in the direction of the filling opening (13) and which is made from a different material than the piston jacket (19).

10. A dispensing apparatus in accordance with claim 9,
**characterized in that**
the piston (17) is of one piece design.

11. A dispensing apparatus in accordance with any one of the claims 1 to 10,
**characterized in that**
the storage container (11) and the spring (36) are made of different materials.

12. A dispensing apparatus in accordance with any one of the claims 1 to 11,
**characterized in that**
the actuation element (28) is arranged such that it closes the filling opening (13) of the storage container (11).

13. A dispensing apparatus in accordance with claim 12,
**characterized in that**
the actuation element (28) has a groove (32) in which a bulge (33) of the storage container (11) is arranged.

14. A dispensing apparatus in accordance with claim 13,
**characterized in that**,
in the final position of the actuation element (28), the bulge (33) lies at an end flank (35) of the groove (32) oriented in the direction of the dispensing opening (14).

## Revendications

1. Dispositif de distribution d'un composant capable de s'écouler, comportant
- un réservoir (11) pourvue d'une chambre de réserve (12) pour recevoir le composant, d'une ouverture de remplissage (13) et d'une ouverture de distribution (14),
- un piston (17) qui est agencé à l'intérieur du réservoir (11) de façon mobile en translation vers une direction d'extraction et qui permet d'extraire le composant hors de la chambre de réserve (12) via l'ouverture de distribution (14),
- un élément d'actionnement (28) permettant de pousser le piston (17) par pas en direction de l'ouverture de distribution (14), et
- un ressort (36) agissant sur l'élément d'actionnement (28),
dans lequel
- l'élément d'actionnement (28) et le piston (17) sont réalisés et agencés de telle sorte que lors d'une translation de l'élément d'actionnement (28) depuis une position initiale jusque dans une position terminale, le piston (17) est translaté d'un pas en direction de l'ouverture de distribution (14), et
- l'élément d'actionnement (28) est mobile en translation depuis la position terminale jusque dans la position initiale au moyen du ressort (36),
et dans lequel
l'élément d'actionnement (28) est agencé au niveau de l'ouverture de remplissage (13) et ladite translation de l'élément d'actionnement (28) s'effectue en direction d'extraction (16),
**caractérisé en ce que**
le réservoir (11) et le ressort (36) sont réalisés d'un seul tenant.

2. Dispositif de distribution selon la revendication 1,
**caractérisé en ce que**
- le piston (17) présente au moins deux surfaces d'avance (25a, 25b, 26a, 26b) espacées en direction d'extraction (16), et
- l'élément d'actionnement (28) présente au moins une surface d'actionnement (27a, 27b),
les surfaces d'avance (25a, 25b, 26a, 26b) et la surface d'actionnement (27a, 27b) étant réalisées et agencées de telle sorte que lors d'une translation de l'élément d'actionnement (28) depuis la position initiale jusque dans la position terminale, une force est transmise sur le piston (17) en direction de l'ouverture de distribution (14) via la surface d'actionnement (27a, 27b) et la surface d'avance (25a, 25b, 26a, 26b).

3. Dispositif de distribution selon la revendication 2,
**caractérisé en ce que**
l'élément d'actionnement (28) dispose d'un bras d'actionnement (29a, 29b) qui est orienté en direction de l'ouverture de distribution (14) et qui présente la surface d'actionnement (27a, 27b).

4. Dispositif de distribution selon la revendication 3,
**caractérisé en ce que**
le bras d'actionnement (29a, 29b) est flexible transversalement à la direction d'extraction (16) et présente une surface de déviation (38a, 38b) qui coopère avec une surface de déflexion (39a, 39b) du piston (17) de telle sorte que le bras d'actionnement (29a, 29b) est ainsi fléchi transversalement à la direction d'extraction (16) lors d'une translation depuis la position terminale jusque dans la position initiale, permettant ainsi un mouvement relatif entre le piston (17) et l'élément d'actionnement (28).

5. Dispositif de distribution selon la revendication 3 ou 4,
**caractérisé en ce que**
le piston (17) présente un volume intérieur de piston (22) ouvert en direction de l'ouverture de remplissage (13), volume qui est délimité transversalement à la direction d'extraction (16) par une jupe de piston (19),
les surfaces d'avance (25a, 25b, 26a, 26b) sont réalisées dans la jupe de piston (19), et
le bras d'actionnement (29a, 29b) pénètre à l'intérieur du volume intérieur de piston (22).

6. Dispositif de distribution selon la revendication 5,
**caractérisé en ce que**
la jupe de piston (19) présente un évidement (23a, 23b, 24a, 24b) qui dispose d'une surface d'avance (25a, 25b, 26a, 26b).

7. Dispositif de distribution selon la revendication 6,
**caractérisé en ce que**
la jupe de piston (17) présente deux évidements (23a, 23b ; 24a, 24b) diamétralement en regard l'un de l'autre, qui disposent chacun d'une surface d'avance (25a, 25b, 26a, 26b).

8. Dispositif de distribution selon l'une des revendications 1 à 7,
**caractérisé en ce que**
le piston (17) comprend un élément d'étanchéité périphérique (20) qui s'appuie contre une paroi intérieure (21) de la chambre de réserve (12).

9. Dispositif de distribution selon l'une des revendications 1 à 7,
**caractérisé en ce que**
le piston (17) comprend un fond de piston (18) qui referme la chambre de réserve (12) en direction de l'ouverture de remplissage (13) et qui est réalisé en un matériau autre que celui de la jupe de piston (19).

10. Dispositif de distribution selon la revendications 9,
**caractérisé en ce que**
le piston (17) est réalisé d'un seul tenant.

11. Dispositif de distribution selon l'une des revendications 1 à 10,
**caractérisé en ce que**
le réservoir (11) et le ressort (36) sont réalisés en matériaux différents.

12. Dispositif de distribution selon l'une des revendications 1 à 11,
**caractérisé en ce que**
l'élément d'actionnement (28) est agencé de manière à refermer l'ouverture de remplissage (13) du réservoir (11).

13. Dispositif de distribution selon la revendication 12,
**caractérisé en ce que**
l'élément d'actionnement (28) présente une gorge (32) dans laquelle est agencée une protubérance (33) du réservoir (11).

14. Dispositif de distribution selon la revendication 13,
**caractérisé en ce que**
dans la position terminale de l'élément d'actionnement (28), la protubérance (33) s'appuie contre un flanc d'extrémité (35) de la gorge (32) orienté en direction de l'ouverture de distribution (14).
